# EUROPEAN PATENT APPLICATION

(11) **EP 3 073 749 A1**
(43) Date of publication of application: **28.09.2016**
(21) Application number: 16161587.7
(22) Date of filing: 22.03.2016
(51) Int. Cl.: H04N 21/431, H04N 21/462

(54) **DISPLAY APPARATUS, SERVER, AND OPERATING METHOD THEREOF**

(30) Priority: 26.03.2015 KR 20150042565
(71) Applicant: Samsung Electronics Co., Ltd., Gyeonggi-do 16677 (KR)
(72) Inventor: JUNG, Do-sung, Seoul (KR); JUNG, Han-chul, Gyeonggi-do (KR); YOON, Dae-won, Gyeonggi-do, (KR); KIM, Min-seup, Seoul (KR); KIM, Soo-hwan, Gyeonggi-do, (KR); LEE, Min-sun, Seoul (KR); LEE, Jong-kee, Seoul (KR); LEE, Hwa-soo, Seoul (KR)
(74) Representative: Hewett, Jonathan Michael Richard

(57) **Abstract**

A display apparatus includes a controller configured to control reproduction of content, a communication circuitry configured to request a server for broadcast channel information related to content being reproduced, and a display configured to display broadcast content related to the content being reproduced, based on the broadcast channel information received from the server.

## Description

The present invention relates to a display apparatus, a server, and an operating method thereof, and more particularly, to a server configured to provide content of interest of a user, a display apparatus configured to display the content of interest provided from the server, and an operating method thereof.

Display apparatuses have a function of displaying an image so that a user may view the image. For example, a television (TV), which is one example of the display apparatuses, previously had only a function of receiving a unidirectional broadcast signal transmitted from a broadcasting station and displaying an image. However, a current TV provides a function capable of outputting various pieces of broadcast content. Accordingly, the number of broadcast channels which a user may select from a TV has been increasing. However, when a broadcast channel is changed using a remote control of a TV by an existing method, a long time is taken to change a broadcast channel.

Therefore, there is a demand of reducing a time taken for a user to change a broadcast channel of a TV to select a desired broadcast channel.

Provided are a display apparatus, a server, and an operating method thereof.

Additional aspects will be set forth in part in the description which follows and, in part, will be apparent from the description, or may be learned by practice of the disclosed embodiments of the present invention.

According to an example of the disclosure, a display apparatus may include: a controller configured to control reproduction of content, a communication circuitry configured to request a server for broadcast channel information related to content being reproduced, and a display configured to display broadcast content related to the content being reproduced, based on the broadcast channel information received from the server.

The communication circuitry may be further configured to transmit partial data of the content being reproduced to the server.

The communication circuitry may be further configured to receive broadcast channel information of a plurality of broadcast channels, and the controller may be further configured to assign priority to each of the plurality of broadcast channels and determine an order in which a plurality of pieces of broadcast content that are provided through the plurality of broadcast channels are to be listed on a screen of the display apparatus, based on the priority.

The controller may be further configured to determine a size by which each of the plurality of pieces of broadcast content that are provided through the plurality of broadcast channels is to be displayed on the screen of the display apparatus, based on the priority.

The display apparatus may further include a storage configured to store meta information of broadcast channels in a multi-dimensional arrangement form.

The communication circuitry may be further configured to transmit identification information of an external device which approaches the display apparatus to the server and receive broadcast channel information for providing broadcast content related to the external device from the server.

According to an example of the disclosure, a display system may include: a display apparatus configured to control reproduction of content and request a server for broadcast channel information related to the content, and the server configured to search for a broadcast channel through which broadcast content related to the content being reproduced by the display apparatus is provided from among broadcast channels in response to the request from the display apparatus and provide information about the searched broadcast channel to the display apparatus.

The display apparatus may be further configured to transmit, to the server, image data obtained by capturing the content being reproduced by the display apparatus or audio data obtained by recording the content for a certain time.

The server may be further configured to acquire supplementary information of the content being reproduced by the display apparatus, based on the image data or the audio data received from the display apparatus, and search for broadcast channels through which broadcast content related to the content being reproduced by the display apparatus is provided, based on the supplementary information of the content and meta information of the broadcast channels.

The meta information of the broadcast channels may include identification information of the broadcast channels, identification information of pieces of broadcast content that are provided through the respective broadcast channels, and supplementary information of each of the pieces of broadcast content.

The display system may further include an external device which approaches the display apparatus, wherein the display apparatus receives identification information of the external device which approaches the display apparatus and transmits the received identification information of the external device to the server, and the server searches for broadcast channels through which broadcast content related to the external device is provided.

According to an example of the disclosure, a server may include: a communication circuitry configured to receive information about content being reproduced by a display apparatus, and a controller configured to provide information about a broadcast channel through which broadcast content related to the content being reproduced by the display apparatus is provided from among broadcast channels to the display apparatus based on the received information about the content.

The controller may be further configured to acquire supplementary information of the content being reproduced by the display apparatus, based on the received information about the content, and search for the broadcast content related to the content being reproduced by the display apparatus, based on the supplementary information of the content being reproduced by the display apparatus and the meta information of the broadcast channels.

The meta information of the broadcast channels may include identification information of the broadcast channels, identification information of pieces of broadcast content that are provided through the respective broadcast channels, and supplementary information of each of the pieces of broadcast content.

The controller may be further configured to assign priority to each of the broadcast channels and search for the broadcast content related to the content being reproduced by the display apparatus, based on the priority.

The received information about the content may be image data captured by the display apparatus or audio data recorded by the display apparatus.

The communication circuitry may be further configured to receive identification information of an external device, and the controller may search for a broadcast channel through which broadcast content related to the external device is provided, based on the meta information of the broadcast channels.

According to an example of the disclosure, a display method of a display apparatus may include: reproducing content, requesting a server for broadcast channel information related to the content being reproduced, and displaying broadcast content related to the content being reproduced, based on the broadcast channel information received from the server.

The requesting for the broadcast channel information may include transmitting partial data of the content being reproduced to the server.

The method may further include receiving broadcast channel information of a plurality of broadcast channels from the server, wherein the displaying of the broadcast content may include: assigning a priority to each of the plurality of broadcast channels, and determining an order in which a plurality of pieces of broadcast content that are provided through the plurality of broadcast channels are to be listed on a screen of the display apparatus, based on the priority.

The displaying of the broadcast content may include determining a size by which each of the plurality of pieces of broadcast content that are provided through the plurality of broadcast channels is to be displayed on the screen of the display apparatus, based on the priority.

The method may further include: transmitting identification information of an external device which approaches the display apparatus, and receiving, from the server, broadcast channel information through which broadcast content related to the external device is provided.

According to an example of the disclosure, a display method of a display system may include: requesting, by a display apparatus, a server for broadcast channel information related to content being reproduced by the display apparatus, searching, by the server, for a broadcast channel through which broadcast content related to the content being reproduced by the display apparatus is provided from among broadcast channels in response to the request from the display apparatus, transmitting, by the server, information about the searched broadcast channel to the display apparatus, and displaying, by the display apparatus, the broadcast content related to the content based on the information about the broadcast channel which has been received from the server.

The requesting, by the display apparatus, the server for the broadcast channel information may include transmitting, to the server, image data obtained by capturing the content being reproduced by the display apparatus or audio data obtained by recording the content for a certain time.

The searching, by the server, for the broadcast channel may include: acquiring supplementary information of the content being reproduced by the display apparatus, based on the image data or the audio data received from the display apparatus, and searching for broadcast channels through which broadcast content related to the content being reproduced by the display apparatus is provided, based on the supplementary information of the content and meta information of the broadcast channels.

The meta information of the broadcast channels may include identification information of the broadcast channels, identification information of pieces of broadcast content that are provided through the respective broadcast channels, and supplementary information of each of the pieces of broadcast content.

The method may further include: receiving, by the display apparatus, identification information of an external device which approaches the display apparatus and transmitting the received identification information of the external device to the server, and searching, by the server, for a broadcast channel through which broadcast content related to the external device is provided from among broadcast channels.

According to an example of the disclosure, a method by which a server provides broadcast channel information to a display apparatus may include: receiving information about content being reproduced by the display apparatus, and providing information about a broadcast channel through which broadcast content related to the content being reproduced by the display apparatus is provided from among broadcast channels to the display apparatus based on the received information about the content.

The providing of the information about the broadcast channel may include: acquiring supplementary information of the content being reproduced by the display apparatus, based on the received information about the content, and searching for the broadcast content related to the content being reproduced by the display apparatus, based on the supplementary information of the content being reproduced by the display apparatus and the meta information of the broadcast channels.

The meta information of the broadcast channels may include identification information of the broadcast channels, identification information of pieces of broadcast content that are provided through the respective broadcast channels, and supplementary information of each of the pieces of broadcast content.

The providing of the information about the broadcast channel may include assigning priority to each of the broadcast channels and searching for the broadcast content related to the content being reproduced by the display apparatus, based on the priority.

The received information about the content may be image data captured by the display apparatus or audio data recorded by the display apparatus.

The method may further include: receiving identification information of an external device, and searching for a broadcast channel through which broadcast content related to the external device is provided, based on the meta information of the broadcast channels.

These and/or other aspects will become apparent and more readily appreciated from the following description of the embodiments, taken in conjunction with the accompanying drawings in which:
FIG. 1 illustrates a configuration of a display system according to an embodiment;
FIG. 2 illustrates a block diagram of a display apparatus according to an embodiment;
FIG. 3 illustrates a block diagram of the display apparatus according to an embodiment;
FIG. 4 illustrates a block diagram of a broadcast channel management server according to an embodiment;
FIGS. 5A and 5B illustrate that the broadcast channel management server stores meta information of broadcast channels, according to an embodiment;
FIGS. 6A and 6B illustrate that the broadcast channel management server stores meta information of broadcast channels, according to an embodiment;
FIG. 7 illustrates a flowchart for describing an operation of the display apparatus, according to an embodiment;
FIG. 8 illustrates an example of requesting for broadcast content related to content being reproduced by the display apparatus;
FIG. 9 illustrates that the display apparatus displays a plurality of pieces of broadcast content related to content being reproduced by the display apparatus, according to an embodiment;
FIG. 10 illustrates that the display apparatus displays a plurality of pieces of broadcast content related to content being reproduced by the display apparatus, according to an embodiment;
FIG. 11 illustrates that the display apparatus displays a plurality of pieces of broadcast content related to content being reproduced by the display apparatus, according to an embodiment;
FIG. 12 illustrates a flowchart for describing an operating method of the broadcast channel management server, according to an embodiment;
FIG. 13 illustrates a signaling diagram for describing an operating method of the display apparatus, the broadcast channel management server, and an external device, according to an embodiment;
FIGS. 14A and 14B illustrate broadcast channel information stored in the display apparatus, according to an embodiment;
FIG. 15 illustrates an audio device which approaches the display apparatus;
FIG. 16 illustrates that the display apparatus updates broadcast channel information stored in a multi-dimensional arrangement form, according to an embodiment; and
FIG. 17 illustrates that the display apparatus displays content related to the audio device through a virtual broadcast channel, according to an embodiment.

Reference will now be made in detail to the embodiments, examples of which are illustrated in the accompanying drawings, wherein like reference numerals refer to like elements throughout. The embodiments are described below to explain the present invention by referring to the figures.

The terms used in the specification will be schematically described, and then, embodiments will be described in detail.

Terms such as "... unit", "... module", or the like refer to units that perform at least one function or operation, and the units may be implemented as hardware or software or as a combination of hardware and software.

In addition, throughout the specification, the term "broadcast channel" may refer to a transmission path allocated to each network or a logical number indicating the transmission path.

In addition, throughout the specification, the term "broadcast content" may refer to digital information provided through a real-time broadcast channel or a video on demand (VOD) content broadcast channel. The broadcast content may include video content (e.g., a TV program image, a VOD, and a music video), still image content (e.g., photographs and pictures), text content, audio content (e.g., music, musical program, and radio broadcast), and the like but is not limited thereto.

Reference will now be made in detail to exemplary embodiments, examples of which are illustrated in the accompanying drawings. In the drawings, parts irrelevant to the description are omitted to clearly describe the exemplary embodiments, and like reference numerals denote like elements throughout the specification. In this regard, the exemplary embodiments may have different forms and should not be construed as being limited to the descriptions set forth herein. Accordingly, the exemplary embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

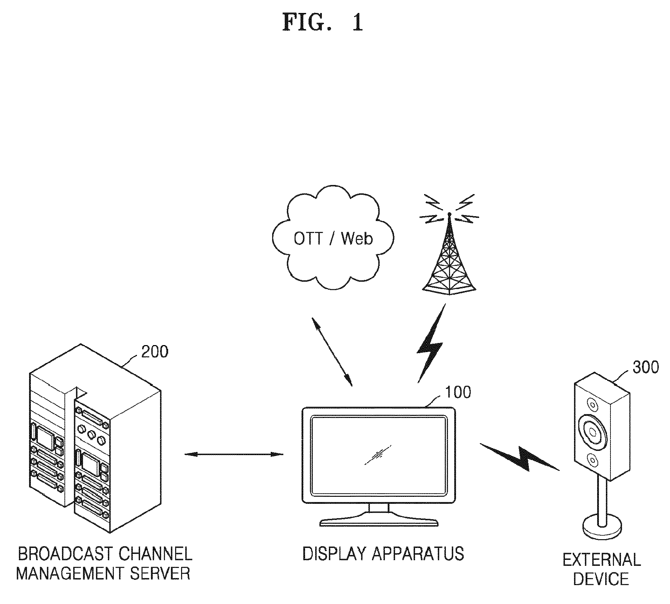

FIG. 1 illustrates a configuration of a display system according to an embodiment.

Referring to FIG. 1, the display system may include a display apparatus 100, a broadcast channel management server 200, and an external device 300.

According to an embodiment, the display apparatus 100 may output content. For example, the display apparatus 100 may receive content through a broadcasting station, a server connected over a network, an external device connected in a wired or wireless manner, a storage included in the display apparatus 100, or the like.

According to an embodiment, the broadcast channel management server 200 may acquire meta information of various broadcast channels, which is provided by the broadcast channels, from a storage (not shown) provided to the broadcast channel management server 200 or broadcast providers. The meta information of the broadcast channels may include identification information of the broadcast channels, identification information of pieces (items) of broadcast content that are provided through the respective broadcast channels, and supplementary information of each of the pieces of broadcast content.

The broadcast channel management server 200 may be connected via a network to the display apparatus 100, servers provided by the broadcast providers, and the like.

According to an embodiment, the display system may provide information about broadcast channels related to content being reproduced by the display apparatus 100.

According to an embodiment, the display apparatus 100 may request the broadcast channel management server 200 for broadcast channel information related to the content being reproduced by the display apparatus 100.

In addition, the broadcast channel management server 200 may search for broadcast content related to the content being reproduced by the display apparatus 100, based on the meta information of the broadcast channels. The broadcast content related to the content being reproduced by the display apparatus 100 may include, for example, broadcast content having the same or similar genre information as or to that of the content being reproduced by the display apparatus 100, broadcast content having the same or similar subject information as or to that of the content being reproduced by the display apparatus 100, and broadcast content having the same or similar character information as or to that of the content being reproduced by the display apparatus 100 but is not limited thereto.

Thereafter, the display apparatus 100 may receive information about broadcast channels through which the broadcast content related to the content being reproduced by the display apparatus 100 is provided from the broadcast channel management server 200 and display the broadcast content together with the content being reproduced. The broadcast content may be provided through the broadcast channels. In addition, each of the broadcast channels may be a transmission path allocated to each network or a logical number indicating the transmission path.

According to another embodiment, the display apparatus 100 may provide broadcast channel information related to the external device 300 which approaches the display apparatus 100. In this case, the external device 300 may transmit and receive image data or audio data to and from the display apparatus 100 through a wired or wireless network. The external device 300 may be, for example, a wired/wireless speaker, a sound bar, a game machine, a sub-display apparatus, a smartphone, a tablet personal computer (PC), a cellular phone, a personal digital assistant (PDA), a laptop computer, a media player, a digital camera, or other mobile or non-mobile device but is not limited thereto.

According to an embodiment, the display apparatus 100 may request the broadcast channel management server 200 for broadcast channel information related to the external device 300 if the external device 300 approaches the display apparatus 100. The broadcast channel management server 200 may transmit information about broadcast channels through which broadcast content related to the external device 300 is provided to the display apparatus 100 based on meta information of the broadcast channels.

For example, when an audio device or a game machine approaches the display apparatus 100, the broadcast channel management server 200 may transmit information about music channels through which music content is provided or information about game channels through which game content is provided to the display apparatus 100.

The display apparatus 100 may include a TV, a hybrid broadcast broadband TV (HBBTV), a smart TV, an Internet protocol TV (IPTV), or the like but is not limited thereto. That is, the display apparatus 100 may include various apparatuses capable of receiving a broadcast signal and transmitting and receiving data over a network.

The network may include a local area network (LAN), a wide area network (WAN), a value added network (VAN), a mobile radio communication network, a broadcasting network, and a satellite communication network, taken alone or in combination. In addition, the network comprehensively means a data communication network through which the components shown in FIG. 1 may smoothly communicate with each other and may include a wired Internet, a wireless Internet, and/or a mobile wireless communication network.

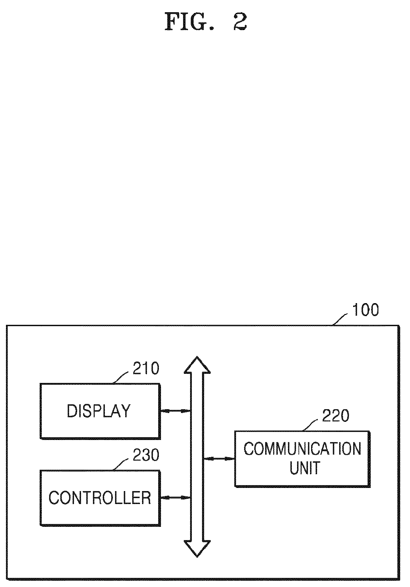

FIG. 2 illustrates a block diagram of the display apparatus 100 according to an embodiment.

Referring to FIG. 2, the display apparatus 100 may include a display 210, a communication unit 220, and a controller 230. In addition, the components included in the display apparatus 100 may be connected to each other.

The display 210 may display content under control of the controller 230.

In addition, the display 210 may display a graphic user interface (GUI) for receiving control information from a user of the display apparatus 100.

According to an embodiment, the display 210 may display content being reproduced under control of the controller 230.

In addition, the display 210 may display broadcast content related to the content being reproduced. According to an embodiment, the display 210 may display the broadcast content in a thumbnail form. In this case, a size and an arrangement order of each thumbnail of the broadcast content displayed in a thumbnail form may vary under control of the controller 230.

In addition, the display 210 may include various devices such as a liquid crystal display (LCD), a cathode ray tube (CRT) display, a plasma display panel (PDP) display, an organic light-emitting diode (OLED) display, a field emission display (FED), a light-emitting diode (LED) display, a vacuum fluorescence display (VFD), a digital light processing (DLP) display, a flat panel display (FPD), a three-dimensional (3D) display, and a transparent display.

According to an embodiment, the communication unit 220 may be configured to communicate with external apparatuses such as the broadcast channel management server 200 and the external device 300 of FIG. 1. In addition, the communication unit 220 may be configured to transmit and receive various kinds of information to and from an external device. For example, the communication unit 220 may include a short-range communication module, a wired communication module, a wireless communication module, and the like.

The short-range communication module indicates a module for performing short-range communication with a device located within a certain distance. According to one or more embodiments, examples of short-range communication technology may include wireless LAN, Wi-Fi, Bluetooth, ZigBee, Wi-Fi Direct (WFD), ultra-wideband (UWB), infrared data association (IrDA), Bluetooth low energy (BLE), near field communication (NFC), and the like but are not limited thereto.

The wired communication module indicates a module for communication using an electrical signal or an optical signal, and examples of wired communication technology may include wired communication techniques using pair cable, coaxial cable, optical fiber cable, and the like and include wired communication techniques which would be apparent to those of ordinary skill in the art.

The wireless communication module transmits and receives a wireless signal to and from at least one of a base station, an external device, and a server in a mobile communication network. Examples of the wireless signal may include a voice call signal, a video call signal, and various types of data according to transmission and reception of a text/multimedia message.

According to an embodiment, the communication unit 220 may transmit information about content being reproduced by the controller 230 to the broadcast channel management server 200. In this case, the information about the content may include image data obtained by capturing the content or audio data obtained by recording the content for a certain time.

Thereafter, the communication unit 220 may receive broadcast channel information from the broadcast channel management server 200. In this case, the broadcast channel information may be identification information of broadcast channels (e.g., numbers or names of the broadcast channels) through which broadcast content related to content being reproduced by the display apparatus 100. In addition, the broadcast content related to the content being reproduced by the display apparatus 100 may include, for example, broadcast content having the same or similar genre information as or to that of the content being reproduced by the display apparatus 100, broadcast content having the same or similar subject information as or to that of the content being reproduced by the display apparatus 100, and broadcast content having the same or similar character information as or to that of the content being reproduced by the display apparatus 100 but is not limited thereto.

In addition, the communication unit 220 may transmit the received broadcast channel information to the controller 230.

The controller 230 may control a general operation of the display apparatus 100 and process various kinds of data required to operate the display apparatus 100.

According to an embodiment, the controller 230 may reproduce content. The content may include broadcast content provided through a broadcast channel and various pieces of content reproducible by the display apparatus 100. For example, the controller 230 may reproduce user created content (UCC), video content provided through an application, and the like.

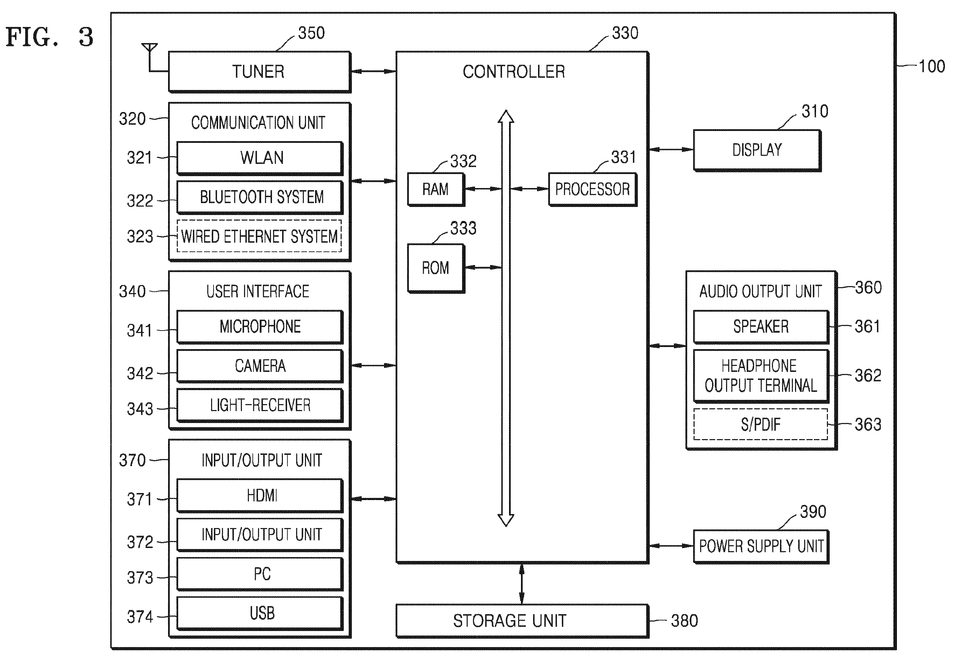

According to an embodiment, the controller 230 may control the communication unit 220 to request the broadcast channel management server 200 for broadcast content related to content being reproduced by the controller 230. For example, when a user input for requesting for broadcast content related to content being reproduced is received through a user interface (see 340 of FIG. 3), the controller 230 may control the communication unit 220 to transmit information about the content being reproduced (e.g., captured image data or audio data obtained by recording content) to the broadcast channel management server 200.

Alternatively, the controller 230 may control the communication unit 220 to periodically transmit information about content being reproduced by the controller 230 to the broadcast channel management server 200.

According to an embodiment, when broadcast channel information is received through the communication unit 220, the controller 230 may control the display 210 to display broadcast content provided through each broadcast channel in a thumbnail form.

In this case, the controller 230 may assign a priority to each broadcast channel. For example, the controller 230 may assign priority to each broadcast channel based on a broadcast view history of a user. Alternatively, the controller 230 may assign priority to each broadcast channel in an order of broadcast channels lately (recently) selected by the user. Alternatively, the controller 230 may assign a higher priority to certain broadcast channels (e.g., paid broadcast channels to which the user of the display apparatus 100 has subscribed or broadcast channels to which higher priority has been assigned by a manufacturer of the display apparatus 100). However, the present invention is not limited thereto. For example, the controller 230 may receive priority of each broadcast channel from the user.

The controller 230 may determine an order in which broadcast content is listed on a screen of the display apparatus 100 based on the priority. Alternatively, the controller 230 may determine a size by which each of pieces of broadcast content is displayed on the screen of the display apparatus 100 based on the priority.

According to an embodiment, when a user input for selecting one of the pieces of the content displayed on the screen of the display apparatus 100 is received, the controller 230 may change a broadcast channel. For example, the controller 230 may change a broadcast channel by controlling a tuner (see 350 of FIG. 3) configured to receive a broadcast signal.

As described above, according to an embodiment, the display apparatus 100 may provide broadcast content related to content which the user is viewing so that the user easily changes a broadcast channel.

FIG. 3 illustrates a block diagram of the display apparatus 100 according to an embodiment.

Referring to FIG. 3, the display apparatus 100 may further include a user interface 340, a tuner 350, an audio output unit 360, and input/output unit 370, a storage 380, and a power supply unit 390 in addition to a display 310, a communication unit 320, and a controller 330 respectively corresponding to the display 210, the communication unit 220, and the controller 230 of FIG. 2.

Alternatively, the display apparatus 100 including the display 310 may be electrically connected to a separate external device having a tuner (e.g., a set-top box (not shown)). For example, the display apparatus 100 may be implemented by an analog TV, a digital TV, a 3D TV, a smart TV, an LED TV, an OLED TV, a plasma TV, a monitor, or the like, but it will be easily understood by those of ordinary skill in the art that the display apparatus 100 is not limited thereto.

The display 310 may display broadcast content included in a broadcast signal received through the tuner 350. In addition, the display 310 may display content (e.g., a video) inputted through the communication unit 320 or the input/output unit 370. The display 310 may display content stored in the storage 380, under control of the controller 330.

According to an embodiment, the display 310 may display broadcast content related to content being reproduced by the controller 330, in a thumbnail form.

According to another embodiment, the display 310 may display broadcast content related to the external device 300 which approaches the display apparatus 100. For example, if an audio device approaches the display apparatus 100, the display 310 may display music broadcast content or game broadcast content under control of the controller 330.

The communication unit 320 may communicate with an external apparatus such as the broadcast channel management server 200 or the external device 300 under control of the controller 330. The controller 330 may transmit/receive content to/from the external apparatus, download an application from the external apparatus, or perform web browsing through the communication unit 320. The communication unit 320 may include at least one of a wireless LAN (WLAN) 321, a Bluetooth system 322, and a wired Ethernet system 323 according to a performance and a structure of the display apparatus 100. In addition, the communication unit 320 may further include a short-range communication system (e.g., an NFC system (not shown) or a BLE system (not shown)) other than the Bluetooth system 322.

According to an embodiment, the communication unit 320 may transmit information about content being reproduced by the controller 330 to the broadcast channel management server 200. Thereafter, the communication unit 320 may receive broadcast channel information related to the content being reproduced by the controller 330 from the broadcast channel management server 200.

According to an embodiment, the communication unit 320 may perform a pairing operation and an authentication operation with the external device 300 which approaches the display apparatus 100, under control of the controller 330. For example, the communication unit 320 may receive identification information of the external device 300 (e.g., a media access control (MAC) address or unique identification information of the external device 300) and transmit identification information of the display apparatus 100 to the external device 300.

In addition, the communication unit 320 may transmit the identification information of the external device 300, of which an authentication operation has been completed, to the broadcast channel management server 200.

Thereafter, the communication unit 320 may receive broadcast channel information related to the external device 300 from the broadcast channel management server 200.

In addition, the communication unit 320 may receive information about a certain broadcast channel preset to the broadcast channel management server 200 as being related to the external device 300. In this case, the certain broadcast channel may include a certain broadcast channel preset to the broadcast channel management server 200 by a manufacturer of the external device 300, a certain broadcast channel preset by the broadcast channel management server 200 as being related to the external device 300, a virtual broadcast channel, or the like, and the certain broadcast channel may be a broadcast channel (e.g., a paid broadcast channel or a private broadcast channel) to which the user of the display apparatus 100 has not subscribed. The virtual broadcast channel may have certain broadcast channel identification information (e.g., a broadcast channel number or a broadcast channel name) virtually allocated for certain content so that the user of the display apparatus 100 accesses the certain content (e.g., a webpage or an application) by means of a broadcast channel number input, a broadcast channel up/down input, or a broadcast channel input on an electronic program guide (EPG) screen image. For example, if a certain virtual broadcast channel (e.g., number 500) is allocated to a certain webpage, the user may access the certain webpage by inputting a broadcast channel number 500 without inputting address information (e.g., uniform resource location (URL) information) of the certain webpage.

Alternatively, the communication unit 320 may receive URL information for providing the content related to the external device 300 from the broadcast channel management server 200. In this case, the controller 330 may generate a virtual broadcast channel in the display apparatus 100 by using the received URL information.

The controller 330 may include at least one of a processor 331, a read-only memory (ROM) 332 that stores a control program for controlling the display apparatus 100, and a random-access memory (RAM) 333 that stores a signal or data inputted from the outside of the display apparatus 100 or is used as a storage are corresponding to various operations performed in the display apparatus 100.

As described above, the controller 330 controls an overall operation of the display apparatus 100 and signal transmission/reception between the internal components 310 through 380 of the display apparatus 100, and processes data. The controller 330 controls power to be supplied to the internal components from the power supply unit 390. In addition, the controller 330 may execute an operation system (OS) and various applications that are stored in the storage 380.

The processor 331 may include a GPU (not shown) for performing graphics processing on a video or an image. The processor 331 may be provided as a system on chip (SoC) in which a core (not shown) is combined with the GPU.

The processor 331 may include a single-core, a dual-core, a triple-core, a quad-core, and a multiple core thereof.

In addition, the processor 331 may include a plurality of processors. For example, the processor 331 may include a main processor (not shown) and a sub- processor (not shown) operating in a sleep mode. In addition, the processor 331, the ROM 332, and the RAM 333 may be connected to each other.

In the embodiments described above and the embodiments to be described below, the term "controller" of the display apparatus 100 may include the processor 331, the ROM 332, and the RAM 333.

According to an embodiment, the controller 330 may control reproduction of content. In addition, the controller 330 may control the communication unit 320 to request the broadcast channel management server 200 for broadcast content related to content being reproduced by the controller 330.

According to an embodiment, the controller 330 may control the communication unit 320 to request the broadcast channel management server 200 for broadcast content related to the external device 300 which approaches the display apparatus 100.

Thereafter, if certain broadcast channel information is received from the broadcast channel management server 200 to the communication unit 320, the controller 330 may update information about broadcast channels stored in the storage 380 in a multi-dimensional arrangement form. In addition, the controller 330 may control a change in a broadcast channel so as to display the broadcast content related to the external device 300.

The user interface 340 may receive an input from a remote control device (e.g., a remote control) linked to the display apparatus 100, voice of the user, an image of the user, or the like. The user interface 340 may include a microphone 341, a camera 342, and a light-receiver 343.

According to an embodiment, the user interface 340 may receive a user input for requesting for broadcast content related to content being reproduced by the controller 330. In addition, the user interface 340 may receive a user input for selecting one of a plurality of pieces of broadcast content provided in a thumbnail form.

The light-receiver 343 may receive an optical signal (including a control signal), which is received from the remote control device linked to the display apparatus 100, through a light window (not shown) or the like in a bezel of the display 310. The light-receiver 343 may receive an optical signal corresponding to the user's input (e.g., a touch, a push, a touch gesture, a voice, or a motion) from the remote control device. The control signal may be extracted from the received optical signal under control of the controller 330. It will be easily understood by those of ordinary skill in the art that the control signal received from the remote control device may also be implemented in a Bluetooth signal type, a radio frequency (RF) signal type, or a Wi-Fi signal type other than an optical signal type.

The microphone 341 receives the user's uttered voice. The microphone 341 may convert the received voice into an electrical signal and may output the electrical signal to the controller 330. The user's voice may include, for example, a voice corresponding to a menu or a function of the display apparatus 100. A recommended recognition range of the microphone 341 may be about 4 m between the microphone 341 and the user's position, and may vary according to the user's voice tone and an ambient environment (e.g., a speaker sound or an ambient noise).

The microphone 341 may be integrated into or separated from the display apparatus 100. The microphone 341 separated from the display apparatus 100 may be electrically connected to the display apparatus 100 through the communication unit 320 or the input/output unit 370.

It will be easily understood by those of ordinary skill in the art that the microphone 341 may be omitted according to a performance and a structure of the display apparatus 100.

The tuner 350 may select a channel to be desired to receive in the display apparatus 100 by tuning only a frequency of the channel from among many electronic wave components through amplification, mixing, resonance and the like on a broadcast signal received in a wired or wireless manner. The broadcast signal may include audio, video, and additional information (e.g., EPG).

The tuner 350 may receive a broadcast signal in a frequency band corresponding to a channel number (e.g., a cable broadcast channel number 300) according to an input (e.g., a channel number input, or a channel up/down input) from the remote control device linked to the display apparatus 100.

The tuner 350 may receive the broadcast signal from various sources such as terrestrial broadcasting stations, cable broadcasting stations, satellite broadcasting stations, and Internet broadcasting stations. The tuner 350 may receive the broadcast signal from sources such as analog broadcasting stations, digital broadcasting stations, and the like. The broadcast signal received through the tuner 350 is decoded (e.g., audio decoding, video decoding, or additional information decoding) and separated into audio, video, and/or additional information. The separated audio, video, and/or additional information may be stored in the storage 380 under control of the control unit 330.

The tuner 350 of the display apparatus 100 may be single or plural in number. The tuner 350 may be implemented to be all-in-one with the display apparatus 100 or as a separate device (e.g., a set-top box (not shown) or a tuner (not shown) connected to the input/output unit 370) having a tuner electrically connected to the display apparatus 100.

The audio output unit 360 may output audio data processed by the display apparatus 100. The audio output unit 360 may include at least one of a speaker 361, a headphone output terminal 362, and a Sony/Philips digital interface (S/PDIF) output terminal 363.

The input/output unit 370 receives a video (e.g., a moving image), an audio (e.g., a voice or music), and additional information (e.g., EPG) from the outside of the display apparatus 100 under control of the controller 330. The input/output unit 370 may include at least one of a high-definition multimedia interface (HDMI) port 371, a component jack 372, a PC port 373, and a universal serial bus (USB) port 374.

It will be easily understood by those of ordinary skill in the art that the input/output unit 370 may be configured and operate in various ways according to one or more exemplary embodiments.

The storage 380 may store various data, programs, or applications for driving and controlling the display apparatus 100 under control of the controller 330. The storage 380 may store signals or data that are inputted/outputted according to operations of the display 310, the communication unit 320, the controller 330, the user interface 340, the tuner 350, the audio output unit 360, and the input/output unit 370. The storage 380 may store a control program for controlling the display apparatus 100 and the controller 330, an application that is initially provided by a manufacturer or downloaded from the outside, a GUI related to the application, an object (e.g., an image, text, an icon, or a button) for providing the GUI, user information, a document, databases, or related data.

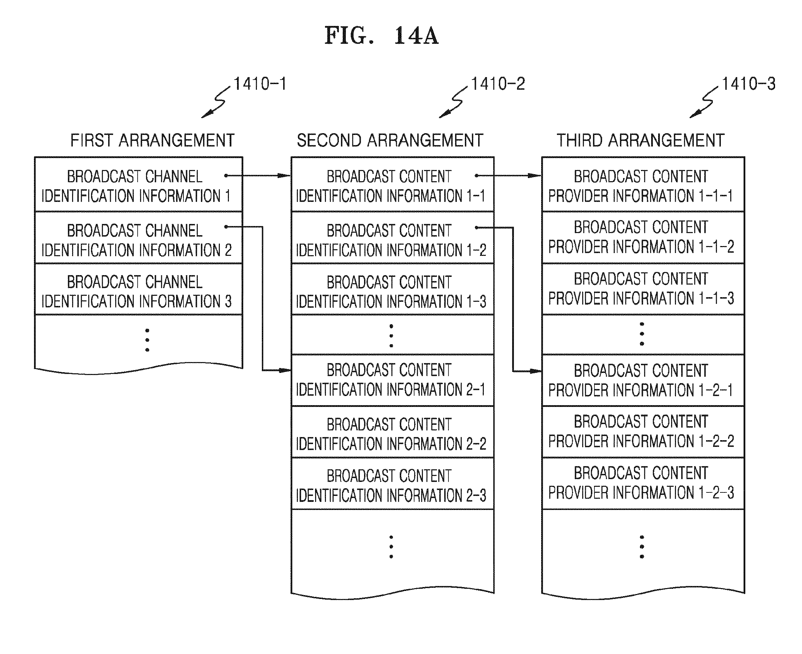

According to an embodiment, the storage 380 may store information about broadcast channels provided by the display apparatus 100 (hereinafter, referred to as "broadcast channel information") in a multi-dimensional arrangement form. According to an embodiment, the controller 330 may dynamically add or delete a certain broadcast channel by using the multi-dimensional arrangement form. For example, when the user of the display apparatus 100 newly subscribes to a certain broadcast channel, the controller 330 may update the broadcast channel information. For example, the controller 330 may add supplementary information of broadcast content provided through the certain broadcast channel. In addition, the controller 330 may add or delete a virtual broadcast channel by using the multi-dimensional arrangement form. The broadcast channel information stored in the storage 380 in the multi-dimensional arrangement form and a method of adding or deleting a broadcast channel will be described below with reference to FIGS. 14A through 17.

According to an embodiment, the term 'storage' may include the storage 380, the ROM 332 or the RAM 333 of the controller 330, or a memory card (e.g., a micro secure digital (SD) card or a USB memory) that is mounted in the display apparatus 100. In addition, the storage 380 may include a nonvolatile memory, a volatile memory, a hard disk drive (HDD), or a solid-state drive (SSD).

The storage 380 may include a broadcast reception module, a channel control module, a volume control module, a communication control module, a voice recognition module, a motion recognition module, a light reception module, a display control module, an audio control module, an external input control module, a power control module, a power supply control module of an external apparatus that is connected through wireless communication (e.g., Bluetooth), a voice database (DB), or a motion DB, which are not shown. The modules and the DBs of the storage 380 that are not shown may be configured as software for the display apparatus 100 to perform functions of broadcast reception control, channel control, volume control, communication control, voice recognition, motion recognition, light reception control, display control, audio control, external input control, power control, and power control of an external apparatus that is connected through wireless communication (e.g., Bluetooth). The controller 330 may perform each function by using the software that is stored in the storage 380.

At least one component may be added to or omitted from the components of the display apparatus 100 of FIGS. 2 and 3 according to a performance of the display apparatus 100.

In addition, it will be easily understood by those of ordinary skill in the art that positions of the components may vary according to a performance or a structure of the display apparatus 100.

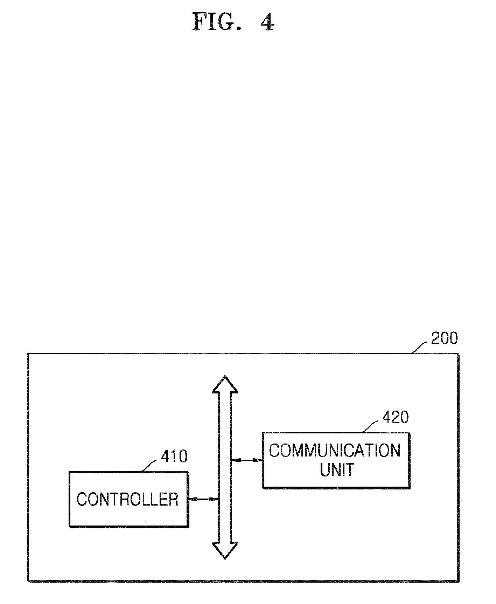

FIG. 4 illustrates a block diagram of the broadcast channel management server 200 according to an embodiment.

Referring to FIG. 4, the broadcast channel management server 200 may include a controller 410 and a communication unit 420. In addition, the components included in the broadcast channel management server 200 may be connected to each other.

The communication unit 420 of the broadcast channel management server 200 may include components for communicating with an external apparatus such as the display apparatus 100. For example, the communication unit 420 may communicate with the display apparatus 100 and/or an external device through a LAN, a WAN, a VAN, a mobile radio communication network, a broadcasting network, a satellite communication network, and the like but is not limited thereto.

According to an embodiment, the communication unit 420 may receive information about content being reproduced by the display apparatus 100 from the display apparatus 100. The information about the content may be image data captured by the display apparatus 100 or audio data recorded by the display apparatus 100. According to another embodiment, the communication unit 420 may receive identification information of the external device 300 which approaches the display apparatus 100. In this case, the identification information of the external device 300 may include a MAC address, a unique identification number, or the like of the external device 300.

In addition, the communication unit 420 may provide the received information about the content or the identification information of the external device 300 to the controller 410.

The controller 410 controls an overall operation of the broadcast channel management server 200 and may process various kinds of data required to operate the broadcast channel management server 200. The controller 410 may include a central processing unit (CPU), a microprocessor, a ROM, and the like.

According to an embodiment, the controller 410 may acquire supplementary information of the content being reproduced by the display apparatus 100 by using the information about the content which has been provided from the communication unit 410. For example, the controller 410 may acquire genre information, character information, background information, and the like in the supplementary information of the content being reproduced by the display apparatus 100, through an automatic content recognition (ACR) scheme (e.g., a watermarking scheme or a finger printing scheme).

In addition, the controller 410 may search for a broadcast channel through which broadcast content related to the content being reproduced by the display apparatus 100 is provided from among broadcast channels. For example, the controller 410 may search for broadcast content having the same or similar genre information as or to that of the content being reproduced by the display apparatus 100, broadcast content having the same or similar subject information as or to that of the content being reproduced by the display apparatus 100, broadcast content having the same or similar character information as or to that of the content being reproduced by the display apparatus 100, and the like from among real-time broadcast content or VOD broadcast content provided through broadcast channels.

In addition, the controller 410 may acquire meta information of the broadcast channels. The meta information of the broadcast channels may include, for example, identification information of the broadcast channels, identification information of pieces of broadcast content that are provided through the respective broadcast channels, and supplementary information of each of the pieces of broadcast content. The supplementary information of each of the pieces of broadcast content may include, for example, genre information of the broadcast content, section information of the broadcast content, character information of the broadcast content, and background information of the broadcast content.

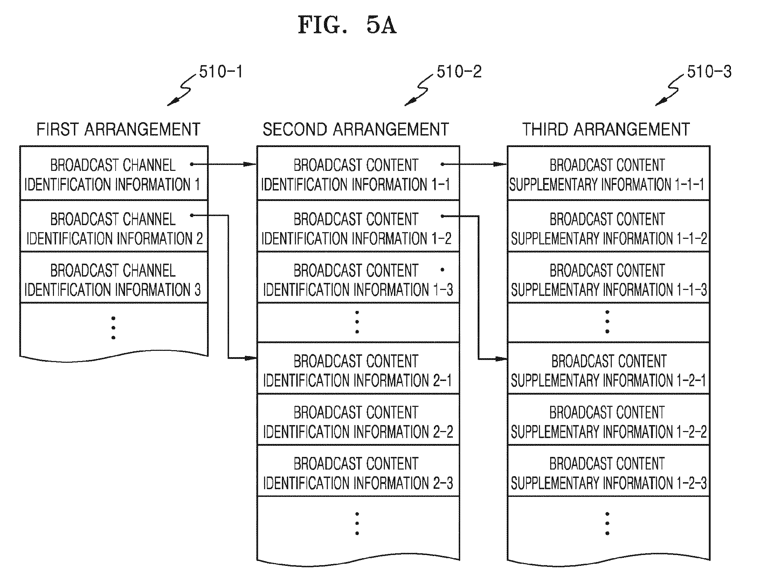

According to an embodiment, the controller 410 may search for broadcast content related to the content being reproduced by the display apparatus 100 and broadcast channels through which the broadcast content is provided, based on the supplementary information of the content, which has been acquired through the ACR scheme, and the meta information of the broadcast channels. A method by which the controller 410 searches for broadcast content related to the content being reproduced by the display apparatus 100 and broadcast channels through which the broadcast content is provided will be described below with reference to FIGS. 5A through 6B. Thereafter, the communication unit 420 may transmit broadcast channel information for providing the broadcast content related to the content being reproduced by the display apparatus 100 to the display apparatus 100.

According to another embodiment, the controller 410 may receive identification information of the external device 300 from the communication unit 420. In this case, the controller 420 may acquire information related to the external device 300 based on the identification information of the external device 300. For example, the controller 410 may detect a type (e.g., an audio device or a game machine) of the external device 300 by using the identification information of the external device 300.

The controller 410 may search for broadcast channels related to broadcast content related to the external device 300 based on the meta information of the broadcast channels and control the communication unit 420 to transmit the searched information to the display apparatus 100.

Alternatively, the controller 410 may control the communication unit 420 to transmit, to the display apparatus 100, information about a certain broadcast channel preset to the broadcast channel management server 200 as being related to the external device 300. In this case, the certain broadcast channel may include a certain broadcast channel preset to the broadcast channel management server 200 by a manufacturer of the external device 300, a certain broadcast channel preset by the broadcast channel management server 200 as being related to the external device 300, a virtual broadcast channel, or the like, and the certain broadcast channel may be a broadcast channel (e.g., a paid broadcast channel or a private broadcast channel) to which the user of the display apparatus 100 has not subscribed. The virtual broadcast channel may have certain broadcast channel identification information (e.g., a broadcast channel number or a broadcast channel name) virtually allocated for certain content so that the user of the display apparatus 100 accesses the certain content (e.g., a webpage or an application) by means of a broadcast channel number input, a broadcast channel up/down input, or a broadcast channel input on an EPG screen image.

Although it has been described with reference to FIGS. 2 through 4 that the display apparatus 100 and the broadcast channel management server 200 are independent from each other, the embodiments described above are not limited thereto. Components of the broadcast channel management server 200 may be included in the display apparatus 100.

For example, the communication unit 420 and the controller 410 of the broadcast channel management server 200 may be included in the communication unit 220 or 320 and the controller 230 or 330 of the display apparatus 100, respectively.

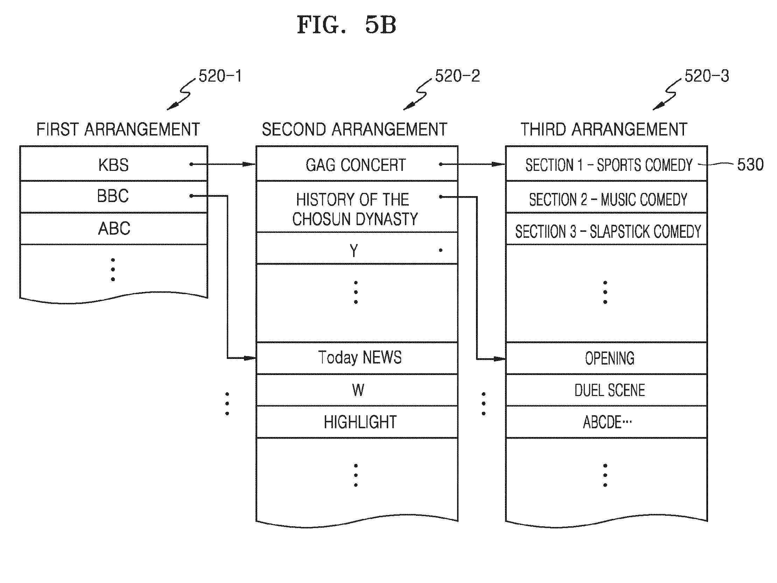

FIGS. 5A and 5B illustrate that the broadcast channel management server 200 stores meta information of broadcast channels, according to an embodiment.

According to an embodiment, the broadcast channel management server 200 of FIG. 4 may further include a storage (not shown). In this case, the broadcast channel management server 200 may store meta information of broadcast channels in a multi-dimensional arrangement form. The meta information of the broadcast channels may be acquired from broadcast providers.

Referring to FIG. 5A, the meta information of the broadcast channels may include a first arrangement 510-1 including identification information of the broadcast channels (e.g., names of the broadcast channels or numbers of the broadcast channels), a second arrangement 510-2 including identification information of pieces of broadcast content that are provided through the respective broadcast channels (e.g., titles or unique identification numbers of the pieces of broadcast content), and a third arrangement 510-3 including supplementary information of each of the pieces of broadcast content (e.g., section information, character information, or genre information of the broadcast content). The broadcast channel management server 200 may store the first arrangement 510-1, the second arrangement 510-2, and the third arrangement 510-3 by linking the first arrangement 510-1, the second arrangement 510-2, and the third arrangement 510-3 by means of a pointer addressing method.

For example, as shown in FIG. 5B, a first arrangement 520-1 may include information about broadcast channel names, such as "Korea Broadcasting System (KBS)" and "British Broadcasting Corporation (BBC)", a second arrangement 520-2 may include information about titles of broadcast content, such as "gag concert" and "history of the Chosun Dynasty" that are titles of broadcast content provided through a KBS broadcast channel, and a third arrangement 520-3 may include information about sections included in broadcast content, such as sections included in broadcast content "gag concert".

According to an embodiment, the broadcast channel management server 200 may search for the same or similar value as or to supplementary information of content being reproduced by the display apparatus 100 from among supplementary information of broadcast content included in the third arrangement 520-3. For example, when a sports event is being reproduced by the display apparatus 100, the broadcast channel management server 200 may search for "section 1: sports comedy" from among supplementary information of "gag concert" included in the third arrangement 520-3.

In addition, the broadcast channel management server 200 may acquire identification information (i.e., "gag concert") of broadcast content and identification information (i.e., "KBS") of a broadcast channel which are linked to the searched value, based on the first arrangement 520-1 and the second arrangement 520-2 corresponding to the third arrangement 520-3.

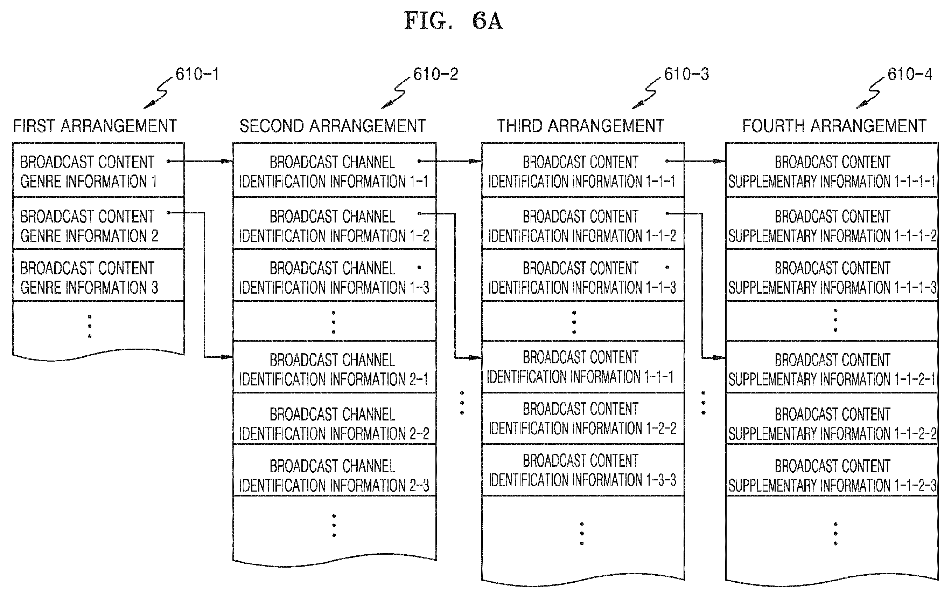

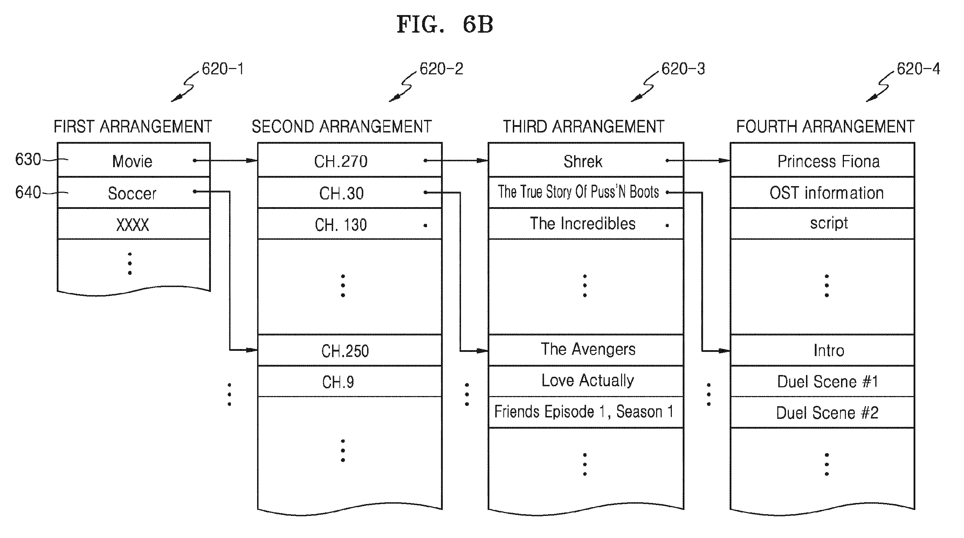

FIGS. 6A and 6B illustrate that the broadcast channel management server 200 stores meta information of broadcast channels, according to an embodiment.

Referring to FIG. 6A, meta information of a plurality of broadcast channels, which is stored in the broadcast channel management server 200, may include a first arrangement 610-1 including broadcast content genre information (e.g., sports, movie, and advertisement), a second arrangement 610-2 including identification information of broadcast channels corresponding to respective broadcast content genres (e.g., names or numbers of the broadcast channels), and a third arrangement 610-3 including identification information of pieces of broadcast content that are provided through the broadcast channels (e.g., titles of the pieces of broadcast content). In addition, the meta information of the plurality of broadcast channels may further include a fourth arrangement 610-4 including supplementary information of the pieces of broadcast content (e.g., character information and background information of the pieces of broadcast content).

For example, as shown in FIG. 6B, a first arrangement 620-1 may include information about movie, soccer, and the like, a second arrangement 620-2 may include information about identification information of broadcast channels, such as "broadcast channel number 270 (CH. 270)" and "broadcast channel number 30 (CH. 30)", a third arrangement 620-3 may include information about identification information of pieces of broadcast content that are provided through the broadcast channels, such as "Shrek", and a fourth arrangement 620-4 may include information about supplementary information of the pieces of broadcast content, such as character information.

According to an embodiment, the broadcast channel management server 200 may search for the same or similar value as or to supplementary information of content being reproduced by the display apparatus 100 from among broadcast content genre information included in the first arrangement 620-1. For example, when the content being reproduced by the display apparatus 100 is soccer movie, the broadcast channel management server 200 may search for movie 630 and soccer 640 from among the broadcast content genre information included in the first arrangement 620-1.

In addition, the broadcast channel management server 200 may acquire identification information of broadcast content and identification information of a broadcast channel which are linked to the searched value, based on the second arrangement 620-2 through the fourth arrangement 620-4.

Although it has been described with reference to FIGS. 6A and 6B that genre information of broadcast content is stored in the first arrangement 610-1 of FIG. 6A or 620-1 of FIG. 6B, the present invention is not limited thereto, and various kinds of information may be stored in the first arrangement 610-1 or 620-1. For example, subject information or character information of broadcast content may be stored in the first arrangement 610-1 or 620-1.

In addition, although it has been described with reference to FIGS. 5A through 6B that the broadcast channel management server 200 stores meta information of broadcast channels in a three-dimensional or four-dimensional arrangement form, the embodiments are not limited thereto, and meta information of broadcast channels may be stored in five-or more-dimensional arrangement form.

As described above, the broadcast channel management server 200 may easily search for broadcast content related to content being reproduced by the display apparatus 100 by using meta information of broadcast channels, which is stored in a multi-dimensional arrangement form.

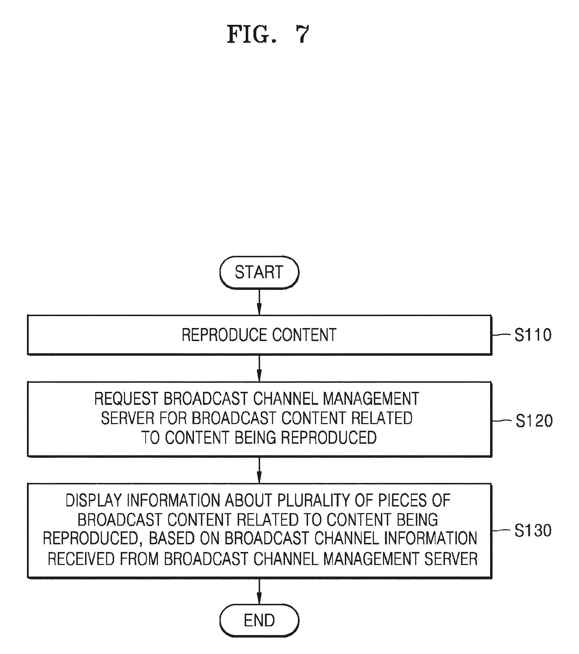

FIG. 7 illustrates a flowchart for describing an operation of the display apparatus 100, according to an embodiment.

Referring to FIG. 7, in operation S110, the display apparatus 100 may reproduce content.

For example, the display apparatus 100 may reproduce content provided through one of broadcast channels or may reproduce various pieces of content provided from an external server connected in a wired or wireless manner thereto by streaming or downloading the content. Alternatively, the display apparatus 100 may reproduce content stored in the storage 380 (see FIG. 3) of the display apparatus 100.

In operation S120, the display apparatus 100 may request the broadcast channel management server 200 for broadcast content related to the content being reproduced. For example, the display apparatus 100 may receive a user input for requesting for broadcast content related to the content being reproduced. In detail, the display apparatus 100 may receive a user input through a GUI displayed on the screen of the display apparatus 100. Alternatively, the display apparatus 100 may receive a user input for requesting for broadcast content related to the content being reproduced through a function key, a menu key, or the like included in a control device (e.g., a remote control) linked to the display apparatus 100.

If the user input is received, the display apparatus 100 may transmit information about the content being reproduced to the broadcast channel management server 200. For example, if the user input is received, the display apparatus 100 may capture the content being reproduced and transmit the captured image data to the broadcast channel management server 200. Alternatively, if the user input is received, the display apparatus 100 may record the content being reproduced for a certain time from a time point where the user input is received and transmit the recorded audio data to the broadcast channel management server 200.

Alternatively, the display apparatus 100 may transmit meta information of broadcast content being reproduced (e.g., character information or genre information of the broadcast content) to the broadcast channel management server 200.

In addition, the display apparatus 100 may receive, from the broadcast channel management server 200, information about broadcast channels through which broadcast content related to the content being reproduced by the display apparatus 100 is provided. The broadcast content related to the content being reproduced by the display apparatus 100 may include, for example, broadcast content having the same or similar genre information as or to that of the content being reproduced by the display apparatus 100, broadcast content having the same or similar subject information as or to that of the content being reproduced by the display apparatus 100, and broadcast content having the same or similar character information as or to that of the content being reproduced by the display apparatus 100 but is not limited thereto.

The display apparatus 100 may acquire broadcast content related to the content being reproduced, based on the received broadcast channel information. In operation S130, the display apparatus 100 may display information about a plurality of pieces of broadcast content related to the content being reproduced together with the content being reproduced. For example, the display apparatus 100 may display the content being reproduced and the plurality of pieces of broadcast content related to the content being reproduced, in a thumbnail form.

In this case, the display apparatus 100 may assign priority to each of broadcast channels. For example, the display apparatus 100 may assign priority to each broadcast channel based on a broadcast view history of the user. Alternatively, the display apparatus 100 may assign priority to each broadcast channel in an order of broadcast channels lately (recently) selected by the user. Alternatively, the display apparatus 100 may assign higher priority to certain broadcast channels (e.g., paid broadcast channels to which the user of the display apparatus 100 has subscribed or broadcast channels to which higher priority has been assigned by a manufacturer of the display apparatus 100). However, the present invention is not limited thereto. For example, the display apparatus 100 may receive priority of each broadcast channel from the user.

According to an embodiment, the display apparatus 100 may determine an order in which a plurality of pieces of broadcast content are listed on the screen of the display apparatus 100 based on the priority.

Alternatively, the display apparatus 100 may determine a size by which each of the plurality of pieces of broadcast content is displayed on the screen of the display apparatus 100, based on the priority.

In addition, the display apparatus 100 may change a broadcast channel in response to a user input for selecting one of the plurality of pieces of broadcast content displayed on the screen of the display apparatus 100.

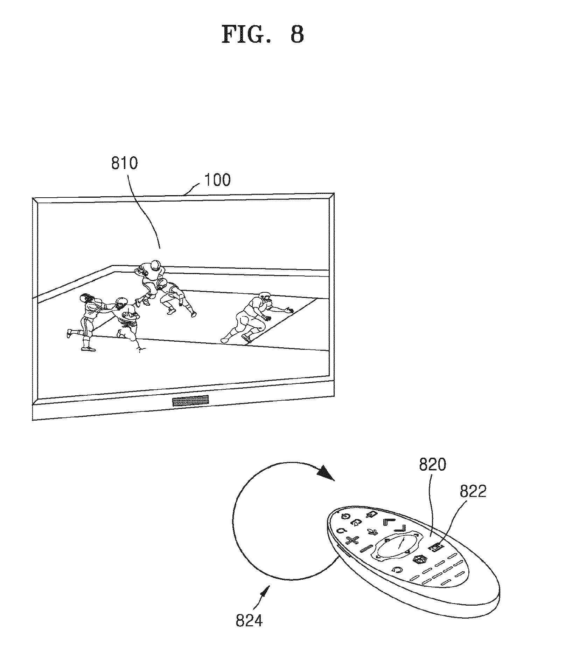

FIG. 8 illustrates an example of requesting for broadcast content related to content being reproduced by the display apparatus 100.

Referring to FIG. 8, the display apparatus 100 may reproduce a soccer match 810. If a user input on a certain key (e.g., a menu key 822 or an option key) included in a remote control 820 is received, the display apparatus 100 may request the broadcast channel management server 200 for information about broadcast content related to the soccer match 810 being reproduced by the display apparatus 100.

Alternatively, if the remote control 820 is a pointing device, when a certain motion input 824 of the user who moves the remote control 820 is received, the display apparatus 100 may request the broadcast channel management server 200 for information about broadcast content related to the soccer match 810 being reproduced by the display apparatus 100.

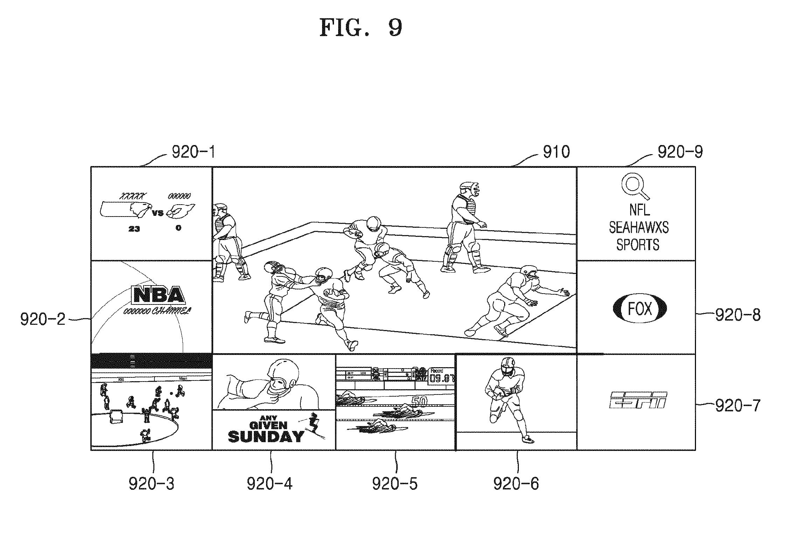

FIG. 9 illustrates that the display apparatus 100 displays a plurality of pieces of broadcast content 920-1 through 920-9 related to content 910 being reproduced by the display apparatus 100, according to an embodiment.

Referring to FIG. 9, the display apparatus 100 may display the content 910 being reproduced by the display apparatus 100 and the plurality of pieces of broadcast content 920-1 through 920-9 related to the content 910 in a thumbnail form.

For example, as shown in FIG. 8, the display apparatus 100 may request the broadcast channel management server 200 for broadcast content related to the soccer match 810 while the soccer match 810 is being reproduced by the display apparatus 100. In this case, the broadcast channel management server 200 may transmit information about broadcast channels through which other soccer matches, other sports matches, soccer movies, soccer equipment advertisements, and the like are provided, to the display apparatus 100 based on meta information of broadcast channels.

According to an embodiment, the display apparatus 100 may display the plurality of pieces of broadcast content 920-1 through 920-9 provided through corresponding broadcast channels in a thumbnail form based on the received broadcast channel information. In this case, the thumbnails (corresponding to 920-1 through 920-9) may be listed in a descending order (or ascending order) of corresponding broadcast channel identification information.

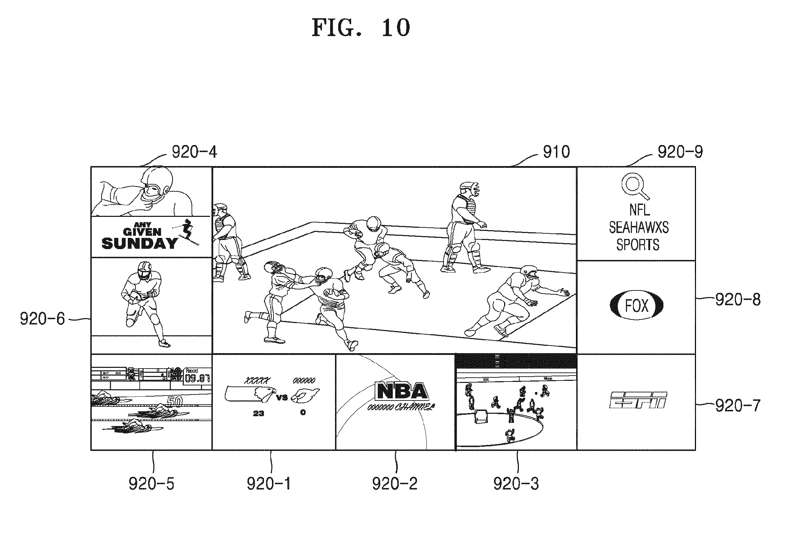

FIG. 10 illustrates that the display apparatus 100 displays the plurality of pieces of broadcast content 920-1 through 920-9 related to the content 910 being reproduced by the display apparatus 100, according to an embodiment.

Referring to FIG. 10, the display apparatus 100 may assign high priority to paid broadcast channels to which the user of the display apparatus 100 has subscribed. In addition, the display apparatus 100 may arrange the thumbnails of the pieces of broadcast content 920-1 through 920-3 provided through broadcast channels having high priority on the center of the screen of the display apparatus 100, based on the priority assigned to each broadcast channel.

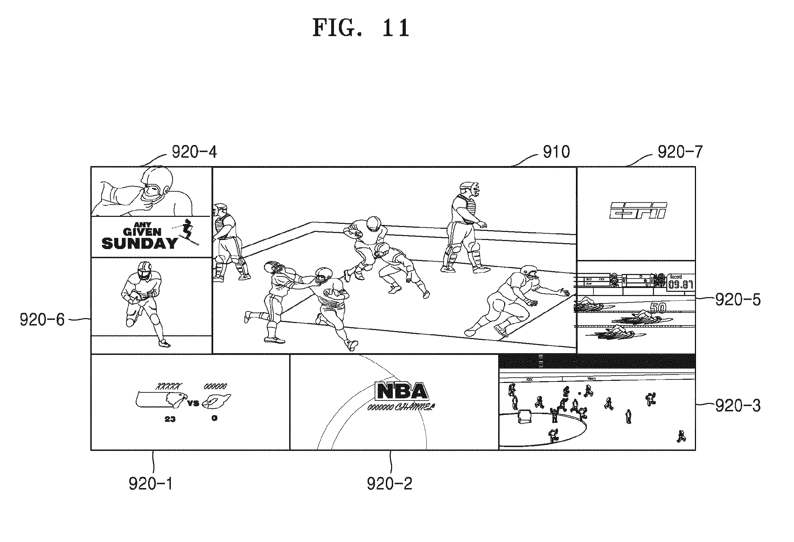

FIG. 11 illustrates that the display apparatus 100 displays the plurality of pieces of broadcast content 920-1 through 920-7 related to the content 910 being reproduced by the display apparatus 100, according to another embodiment.

Referring to FIG. 11, the display apparatus 100 may change a size of the thumbnails of the pieces of broadcast content 920-1 through 920-3 provided through the broadcast channels having high priority, based on the priority assigned to each broadcast channel. For example, the display apparatus 100 may display the thumbnails of the pieces of broadcast content 920-1 through 920-3 provided through the broadcast channels having high priority such that the thumbnails of the pieces of broadcast content 920-1 through 920-3 are larger than the other thumbnails.

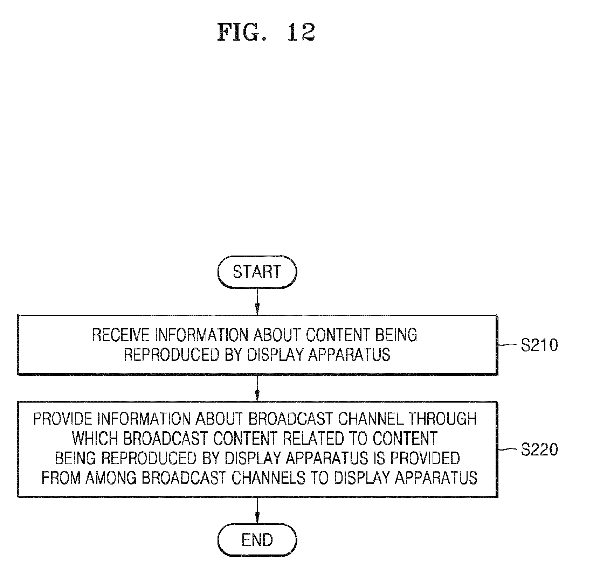

FIG. 12 illustrates a flowchart for describing an operating method of the broadcast channel management server 200, according to an embodiment.

Referring to FIG. 12, in operation S210, the broadcast channel management server 200 may receive information about content being reproduced by the display apparatus 100. For example, the broadcast channel management server 200 may receive captured image data of content captured by the display apparatus 100. Alternatively, the broadcast channel management server 200 may receive audio data of content recorded by the display apparatus 100 for a certain time.

In addition, the broadcast channel management server 200 may acquire supplementary information of the content through an ACR scheme on the captured image data or the audio data. For example, the broadcast channel management server 200 may acquire genre information, character information, background information, and the like of the content through a watermarking scheme or a finger printing scheme.

In addition, the broadcast channel management server 200 may search for a broadcast channel through which broadcast content related to the content being reproduced by the display apparatus 100 is provided from among broadcast channels. The broadcast content may include TV programs or VOD content provided through terrestrial broadcast channels, satellite broadcast channels, cable broadcast channels, Internet broadcast channels, and the like.

In addition, the broadcast content related to the content being reproduced by the display apparatus 100 may include, for example, broadcast content having the same or similar genre information as or to that of the content being reproduced by the display apparatus 100, broadcast content having the same or similar subject information as or to that of the content being reproduced by the display apparatus 100, and broadcast content having the same or similar character information as or to that of the content being reproduced by the display apparatus 100 but is not limited thereto.

The broadcast channel management server 200 may acquire meta information of broadcast channels from broadcast providers and the like. The meta information of the broadcast channels may include, for example, identification information of the broadcast channels, identification information of pieces of broadcast content that are provided through the respective broadcast channels, and supplementary information of each of the pieces of broadcast content. In addition, the broadcast channel management server 200 may store the acquired meta information of the broadcast channels in a multi-dimensional arrangement form as shown in FIGS. 5A through 6B.

According to an embodiment, the broadcast channel management server 200 may search for broadcast content related to the content being reproduced by the display apparatus 100, by using the meta information of the broadcast channels, which is stored in the multi-dimensional arrangement form. For example, the broadcast channel management server 200 may search for content of interest of the user by using the supplementary information of the content, which has been acquired through the ACR scheme, and the meta information of the broadcast channels (e.g., the third arrangement 510-3 of FIG. 5A).

In addition, the broadcast channel management server 200 may search for a broadcast channel through which the searched broadcast content is provided, by using the meta information of the broadcast channels (e.g., the first arrangement 510-1 of FIG. 5A).

In operation S220, the broadcast channel management server 200 may transmit information about a broadcast channel through which the broadcast content related to the content being reproduced by the display apparatus 100 is provided from among the broadcast channels to the display apparatus 100 by using the search result.

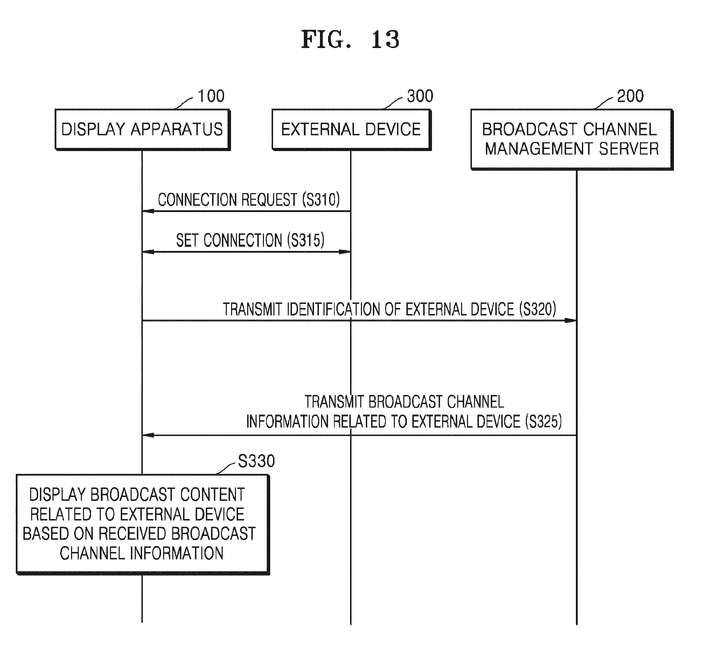

FIG. 13 illustrates a signaling diagram for describing an operating method of the display apparatus 100, the broadcast channel management server 200, and the external device 300, according to an embodiment.

Referring to FIG. 13, in operation S310, when the external device 300 approaches the display apparatus 100, (e.g., within a predetermined distance), the external device 300 may transmit a connection request to the display apparatus 100. For example, the external device 300 may request for a pairing operation and an authentication operation with the display apparatus 100 through Bluetooth, ZigBee, WFD, UWB, IrDA, BLE, NFC, or the like. To this end, the external device 300 may transmit identification information (e.g., a MAC address or unique identification information) of the external device 300 to the display apparatus 100.

Alternatively, the display apparatus 100 may detect the external device 300 which approaches the display apparatus 100 and request the external device 300 for a connection therewith. For example, the display apparatus 100 may detect the external device 300 which approaches the display apparatus 100, through a camera, a proximity sensor, an infrared sensor, or the like. In this case, the display apparatus 100 may start a pairing operation or an authentication operation between the display apparatus 100 and the external device 300 by transmitting identification information (e.g., a MAC address or unique identification information) of the display apparatus 100 to the external device 300.

In operation S315, the display apparatus 100 may set a connection with the external device 300. For example, the display apparatus 100 may register identification of the external device 300 of which authentication has been completed. Thereafter, the external device 300 may be connected to the display apparatus 100 without requiring a separate authentication operation.

Alternatively, the display apparatus 100 may request the user to confirm whether the external device 300 of which authentication has been completed is registered in the display apparatus 100. In this case, the display apparatus 100 may register the external device 300 or reject a connection with the external device 300 based on a user input.

In addition, the display apparatus 100 may download an application for controlling the external device 300.

Thereafter, in operation S320, the display apparatus 100 may transmit the identification information of the external device 300 to the broadcast channel management server 200.

According to an embodiment, in operation S325, the broadcast channel management server 200 may transmit information about broadcast channels related to the external device 300 to the display apparatus 100 based on the identification information of the external device 300. For example, the broadcast channel management server 200 may transmit information about broadcast channels through which broadcast content related to the external device 300 is provided to the display apparatus 100 by using meta information of the broadcast channels as shown in FIGS. 5A through 6B. In this case, the information about the broadcast channels may include identification information of the broadcast channels.

Alternatively, the broadcast channel management server 200 may transmit, to the display apparatus 100, information about a certain broadcast channel preset to the broadcast channel management server 200 as being related to the external device 300. In this case, the preset certain broadcast channel may include a broadcast channel preset by a manufacturer of the external device 300, a broadcast channel preset by the broadcast channel management server 200 as being related to the external device 300, a virtual broadcast channel, or the like, and the certain broadcast channel may be a broadcast channel (e.g., a paid broadcast channel or a private broadcast channel) to which the user of the display apparatus 100 has not subscribed. The virtual broadcast channel may have broadcast channel identification information (e.g., a channel number or a channel name) virtually allocated so as to provide certain content by means of a broadcast channel number input on the display apparatus 100, a broadcast channel up/down input on the display apparatus 100, or a broadcast channel input on an EPG screen image.

Alternatively, the broadcast channel management server 200 may transmit URL information for providing various pieces of content related to the external device 300.

According to an embodiment, if the information about the broadcast channels through which the broadcast content related to the external device 300 is provided is received, the display apparatus 100 may update broadcast channel information stored therein.

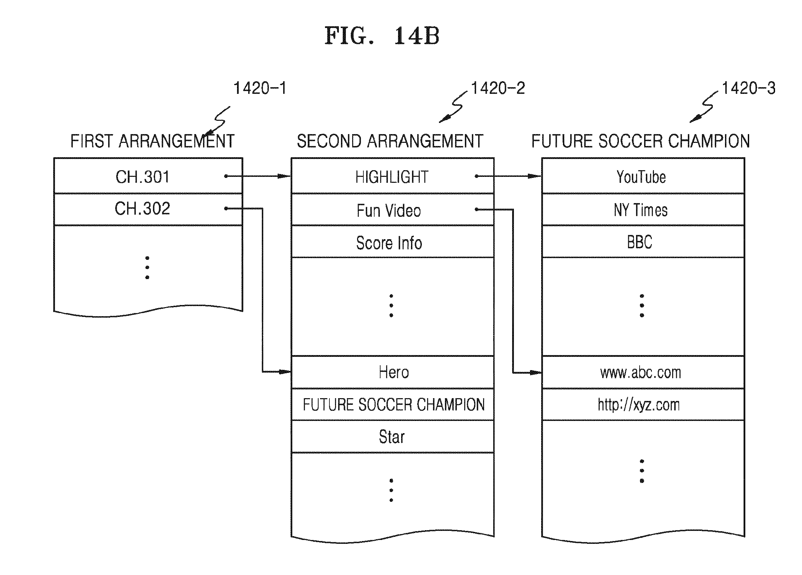

FIGS. 14A and 14B illustrate broadcast channel information stored in the display apparatus 100, according to an embodiment.

Referring to FIG. 14A, the display apparatus 100 may store broadcast channel information in a multi-dimensional arrangement form. According to an embodiment, the broadcast channel information stored in the display apparatus 100 may include a first arrangement 1410-1 including identification information of actual broadcast channels or virtual broadcast channels (e.g., numbers of the broadcast channels or names of the broadcast channels), a second arrangement 1410-2 including identification information of pieces of broadcast content that are provided through the respective broadcast channels (e.g., titles or categories of the pieces of broadcast content), and a third arrangement 1410-3 including supplementary information of each of the pieces of broadcast content (e.g., section information included in the broadcast content, URL information through which the broadcast content is provided, or identification information of content providers providing the display apparatus 100 may store the first arrangement 1410-1, the second arrangement 1410-2, and the third arrangement 1410-3 by linking the first arrangement 1410-1, the second arrangement 1410-2, and the third arrangement 1410-3 by means of a pointer addressing method.

For example, as shown in FIG. 14B, a first arrangement 1420-1 may include information such as "broadcast channel number 301 (CH. 301)" and "broadcast channel number 302 (CH. 302)". In this case, the "broadcast channel number 302 (CH. 302)" may indicate an actual broadcast channel through which a TV program is provided. In this case, a third arrangement 1420-3 corresponding to the "broadcast channel number 302 (CH. 302)" may include section information, character information, and the like of each broadcast content.

The "broadcast channel number 301 (CH. 301)" may indicate a virtual broadcast channel. In this case, the third arrangement 1420-3 corresponding to the "broadcast channel number 301 (CH. 301)" may include information, such as "YouTube" and "NY Times", which is identification information of content providers providing broadcast content (e.g., "Highlight" and "Fun Video").

The display apparatus 100 may allow the user of the display apparatus 100 to conveniently search for actual broadcast channels and virtual broadcast channels by using identification information of broadcast channels, which is stored in the first arrangement 1420-1. For example, the user may easily access not only broadcast content but also various pieces of content provided through virtual broadcast channels by changing up/down a broadcast channel of the display apparatus 100.

Referring back to FIG. 13, according to an embodiment, when the display apparatus 100 receives certain broadcast channel information, the display apparatus 100 may add the certain broadcast channel information to the pre-stored broadcast channel information. Alternatively, when the display apparatus 100 receives URL information from the broadcast channel management server 200, the display apparatus 100 may allocate a virtual broadcast channel and add information about the newly allocated virtual broadcast channel to the pre-stored broadcast channel information.

In operation S330, the display apparatus 100 may display broadcast content related to the external device 300 based on the broadcast channel information received from the broadcast channel management server 200.

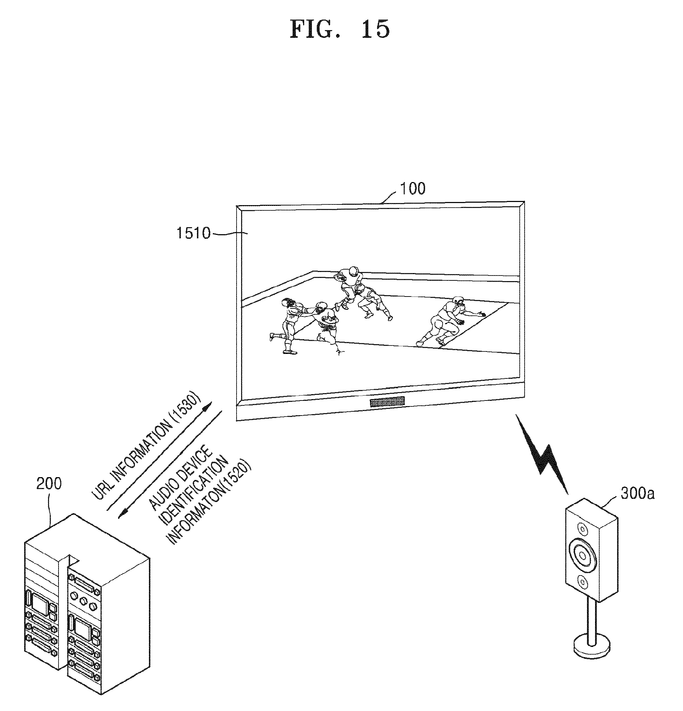

FIG. 15 illustrates an audio device 300a which approaches the display apparatus 100.

Referring to FIG. 15, when the audio device 300a approaches the display apparatus 100, a pairing operation and an authentication operation between the display apparatus 100 and the audio device 300a may be performed.

Thereafter, the display apparatus 100 may transmit identification information 1520 of the audio device 300a to the broadcast channel management server 200. In addition, the display apparatus 100 may receive URL information 1530 related to the audio device 300a from the broadcast channel management server 200.

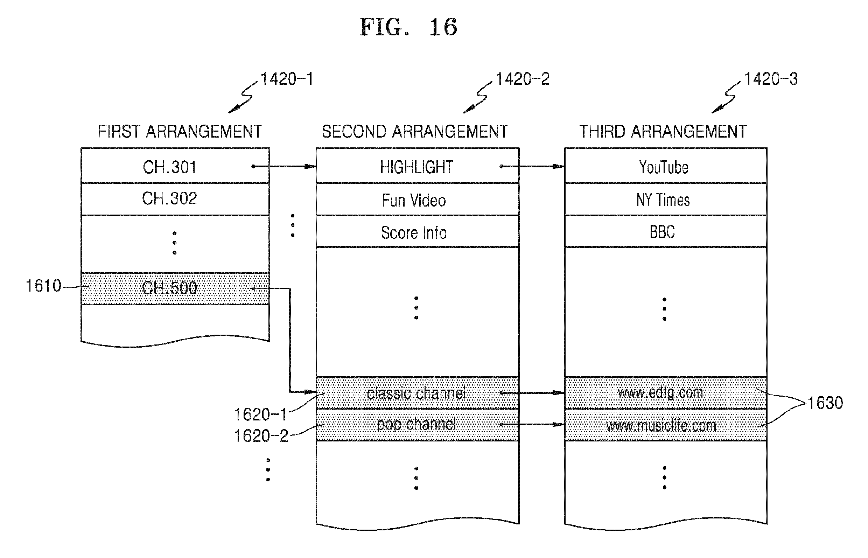

FIG. 16 illustrates that the display apparatus 100 updates broadcast channel information stored in a multi-dimensional arrangement form, according to an embodiment.

Referring to FIG. 16, the display apparatus 100 may receive URL information for providing content related to the audio device 300a from the broadcast channel management server 200.

According to an embodiment, the display apparatus 100 may allocate a virtual broadcast channel number 500 1610 in response to the reception of the URL information. In addition, the display apparatus 100 may add the allocated virtual broadcast channel number 500 1610 to the first arrangement 1420-1. In addition, the display apparatus 100 may add identification information of content provided through the virtual broadcast channel number 500 1610, such as "classic channel" 1620-1 and "pop channel" 1620-2, to a second arrangement 1420-2 and add URL information 1630 for providing each content to the third arrangement 1420-3.

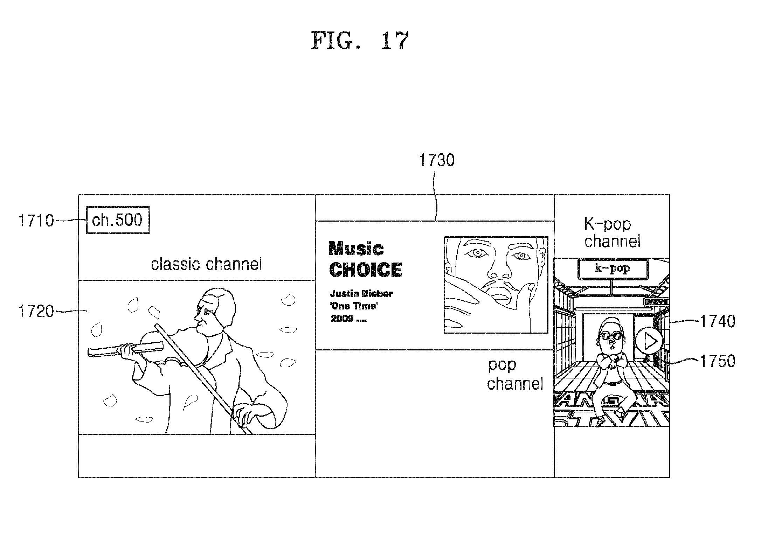

FIG. 17 illustrates that the display apparatus 100 displays content related to the audio device 300a through a virtual broadcast channel, according to an embodiment.

Referring to FIG. 17, the display apparatus 100 may display a virtual broadcast channel (i.e., a virtual broadcast channel number 500 1710) through which content related to the audio device 300a is provided when the audio device 300a approaches the display apparatus 100.

The virtual broadcast channel number 500 1710 may include a plurality of pieces of content (i.e., the "classic channel" 1620-1 and the "pop channel" 1620-2) as shown in FIG. 16. According to an embodiment, the display apparatus 100 may display the plurality of pieces of content 1620-1 and 1620-2 in a form of thumbnails 1720 and 1730. If all pieces of content provided through the virtual broadcast channel number 500 1710 cannot be displayed on the screen of the display apparatus 100, the display apparatus 100 may provide a screen image change GUI 1750 by which a screen image is changed. The user may receive information about "K-pop channel" 1740 and the like by selecting the screen image change GUI 1750.

The display apparatus 100 may receive a user input for selecting one of a plurality of pieces of content provided in a form of thumbnails 1720 through 1740. In this case, the display apparatus 100 may reproduce the selected content by using URL information (see 1630 of FIG. 16) in a third arrangement (see 1420-3 of FIG. 16) of broadcast channel information stored in a multi-dimensional arrangement. For example, the display apparatus 100 may stream or download the selected content from a URL address and then reproduce the streamed or downloaded content.

As described above, the user of the display apparatus 100 may receive content related to the audio device 300a by making the audio device 300a approach the display apparatus 100.

One or more exemplary embodiments may be edited as computer-executable programs and implemented in a general-use digital computer configured to operate the programs by using a non-transitory computer-readable medium.

The non-transitory computer-readable medium may be an arbitrary available medium which may be accessed by a computer system and may include all types of volatile and nonvolatile media and separated and non-separated media.

In addition, the non-transitory computer-readable medium may include all types of computer storage media and communication media. The computer storage media include all types of volatile and nonvolatile and separated and non-separated media implemented by an arbitrary method or technique for storing information such as computer-readable instructions, a data structure, a program module, or other data. The communication media typically include computer-readable instructions, a data structure, a program module, other data of a modulated signal such as a carrier, other transmission mechanism, and arbitrary information delivery media.

The embodiments described above are only illustrative, and it will be understood by those of ordinary skill in the art that various changes in form and details may be made therein without departing from the scope of the invention, as defined by the claims.

Therefore, the embodiments should be understood in the illustrative sense only and not for the purpose of limitation in all aspects. For example, each component described as a single type may be carried out by being distributed, and likewise, components described as a distributed type may also be carried out by being coupled.

It should be understood that embodiments described herein should be considered in a descriptive sense only and not for purposes of limitation. Descriptions of features or aspects within each embodiment should typically be considered as available for other similar features or aspects in other embodiments.

## Claims

1. A display apparatus, comprising:
a controller configured to control reproduction of content;
a communication circuitry configured to request a server for broadcast channel information of a broadcast channel related to the content being reproduced; and
a display configured to display broadcast content related to the content being reproduced, based on the broadcast channel information received from the server.

2. The display apparatus of claim 1, wherein the communication circuitry transmits data related to the content being reproduced to the server as part of the request to the server for the broadcast channel information.

3. The display apparatus of claim 1 or claim 2, wherein
the communication circuitry is further configured to receive broadcast channel information of a plurality of broadcast channels, and
the controller is further configured to assign a priority to each of the plurality of broadcast channels and to determine an order in which a plurality of pieces of broadcast content that are provided through the plurality of broadcast channels are to be listed on a screen of the display apparatus, based on the priority.

4. The display apparatus of claim 3, wherein the controller is further configured to determine a size by which each of the plurality of pieces of broadcast content that are provided through the plurality of broadcast channels is to be displayed on the screen of the display apparatus, based on the priority.

5. The display apparatus of any one of the preceding claims, further comprising a storage configured to store meta information of the broadcast channel in a multi-dimensional arrangement form, based on the broadcast channel information received from the server.

6. The display apparatus of any one of the preceding claims, wherein the communication circuitry is further configured to transmit identification information of an external device which approaches the display apparatus to the server and to receive the broadcast channel information for providing broadcast content related to the external device from the server.

7. The display apparatus of any one of the preceding claims, wherein the communication circuitry transmits, to the server, image data obtained by capturing the content being reproduced or audio data obtained by recording the content for a certain time.

8. A display method of a display apparatus, the method comprising:
reproducing content;
requesting a server for broadcast channel information of a broadcast channel related to the content being reproduced; and
displaying broadcast content related to the content being reproduced, based on the broadcast channel information received from the server.

9. The method of claim 8, wherein the requesting for the broadcast channel information comprises transmitting data related to the content being reproduced to the server.

10. The method of claim 8 or claim 9, further comprising receiving broadcast channel information of a plurality of broadcast channels from the server,
wherein the displaying of the broadcast content comprises:
assigning a priority to each of the plurality of broadcast channels; and
determining an order in which a plurality of pieces of broadcast content that are provided through the plurality of broadcast channels are to be listed on a screen of the display apparatus, based on the priority.

11. The method of any one of claims 8 to 10, wherein the displaying of the broadcast content further comprises determining a size by which each of the plurality of pieces of broadcast content that are provided through the plurality of broadcast channels is to be displayed on the screen of the display apparatus, based on the priority.

12. The method of any one of claims 8 to 11, further comprising:
transmitting identification information of an external device which approaches the display apparatus; and
receiving, from the server, the broadcast channel information through which broadcast content related to the external device is provided.

13. The method of any one of claims 8 to 12, wherein the requesting for the broadcast channel information comprises transmitting, to the server, image data obtained by capturing the content being reproduced by the display apparatus or audio data obtained by recording the content for a certain time.

14. The method of claim 13, wherein the displaying the broadcast content comprises:
receiving, from the server, the broadcast channel information which is related to supplementary information of the content being reproduced and meta data of a plurality of broadcast channels,
wherein the supplementary information of the content is acquired by the server, based on the image data or the audio data received from the display apparatus.

15. A non-transitory computer-readable medium having recorded thereon a computer-readable program for performing the method of any one of claims 8 to 14.
